# EUROPEAN PATENT APPLICATION

(11) **EP 1 089 155 A2**
(43) Date of publication of application: **04.04.2001**
(21) Application number: 00202981.7
(22) Date of filing: 28.08.2000
(51) Int. Cl.: G05G 1/14

(54) **Adjustable pedal-pocketed gears**

(30) Priority: 30.09.1999 US 409514
(71) Applicant: Teleflex Incorporated, Plymouth Meeting, PA 19462 (US)
(72) Inventor: Bortolon, Christopher, Clawson, Michigan 48017 (US)
(74) Representative: Wharton, Peter Robert

(57) **Abstract**

Two embodiments (**10** and **110**) of an adjustable pedal assembly are disclosed and are characterized by a first component (**34** or **134**) surrounding one half of a worm gear (**30** or **130**) and a first length of the worm (**32** or **132**) and a second component (**36** or **136**) surrounding the other one half of the worm gear (**30** or **130**) and a second length of the worm (**32** or **132**). A support (**12** or **112**) includes a pocket holding the first (**34** or **134**) and second (**36** or **136**) components in abutting relationship with one another. In the embodiment of Figures 1-3, the pocket (**46**) is defined by and within the support (**12**) and the support (**12**) includes flexible tabs (**48**) for snapping the first (**34** or **134**) and second (**36** or **136**) components into the pocket (**46**). In the embodiment of Figure 4, the pocket (**146**) is defined by a box-like clamp (**146**) extending about the first (**38** or **138**) and second (**42** or **142**) covers and attached to the support (**112**) by a fastener (**160**).

## Description

### BACKGROUND OF THE INVENTION

### 1. Field of the Invention

The subject invention relates an adjustable pedal assembly for use in an automotive vehicle to adjust the position of the pad supported by a pedal lever between various operational positions to accommodate various operator positions.

### 2. Description of the Prior Art

Such adjustable pedal assemblies typically include a support for attachment to a vehicle, a pedal lever having a distal end, and a pad attached to the distal end of the pedal lever for receiving a force from a vehicle operator for moving the pedal lever from an operational position. A mechanism interconnects the pedal lever and the support for providing an output to a control element in response to movement of the pedal lever from the operational position and for adjusting the pad between various operational positions to accommodate various operator positions. Frequently, a plurality of gears are driven by an electric motor to adjust the pad between various operational positions. These gears are pre-assembled in a gear box which, in turn, must be assembled to the remaining adjustable pedal components. Examples of such assemblies are disclosed in U. S. Patents 3,643,525; 4,875,385; 4,989,474; 5,078,024; 5,460,061; 5,697,260; 5,722,302 and 5,819,593. However, there is always a need to reduce manufacturing and assembly time and expense.

### SUMMARY OF THE INVENTION AND ADVANTAGES

The subject invention provides an improved adjustable pedal assembly comprising a support for attachment to a vehicle, a pedal lever having a distal end, and a pad attached to the distal end of the pedal lever for receiving a force from a vehicle operator for moving the pedal lever from an operational position. A mechanism interconnects the pedal lever and the support for providing an output to a control element in response to movement of the pedal lever from the operational position and for adjusting the pad between various operational positions to accommodate various operator positions and a plurality of gears adjust the pad between various operational positions. The assembly is characterized by a plurality of housing components coacting to surround and support the gears.

Accordingly, the subject invention provides an adjustable pedal assembly wherein the manufacture of the gear train and the other components is greatly simplified as is the assembly of such components.

### BRIEF DESCRIPTION OF THE DRAWINGS

Other advantages of the present invention will be readily appreciated as the same becomes better understood by reference to the following detailed description when considered in connection with the accompanying drawings wherein:
Figure 1 is a perspective view of a first embodiment of the subject invention;
Figure 2 is an exploded partial view of the central section of Figure 1;
Figure 3 is a perspective view of the embodiment of figure 1 during assembly; and
Figure 4 is a perspective view of a second embodiment of the subject invention.

### DETAILED DESCRIPTION OF THE PREFERRED EMBODIMENT

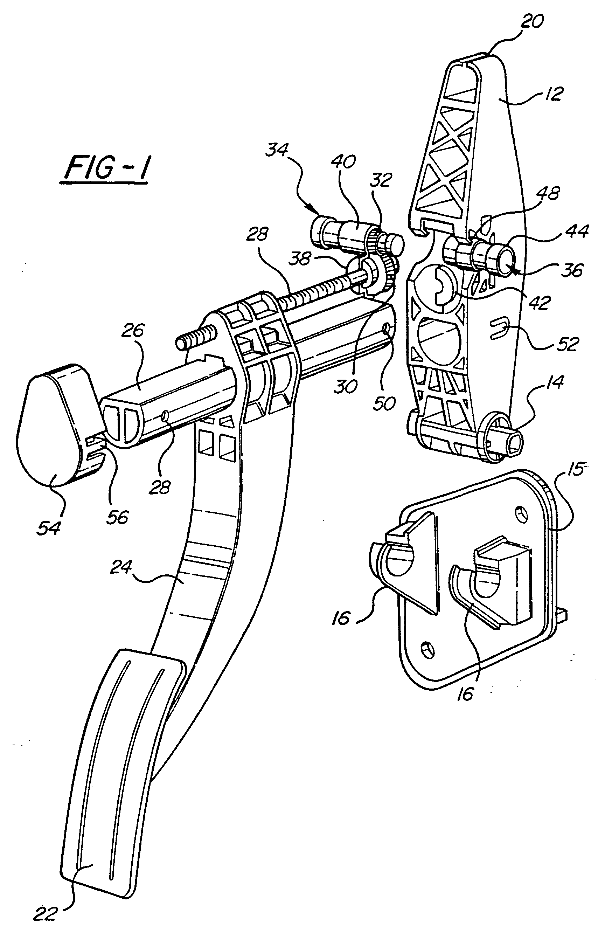

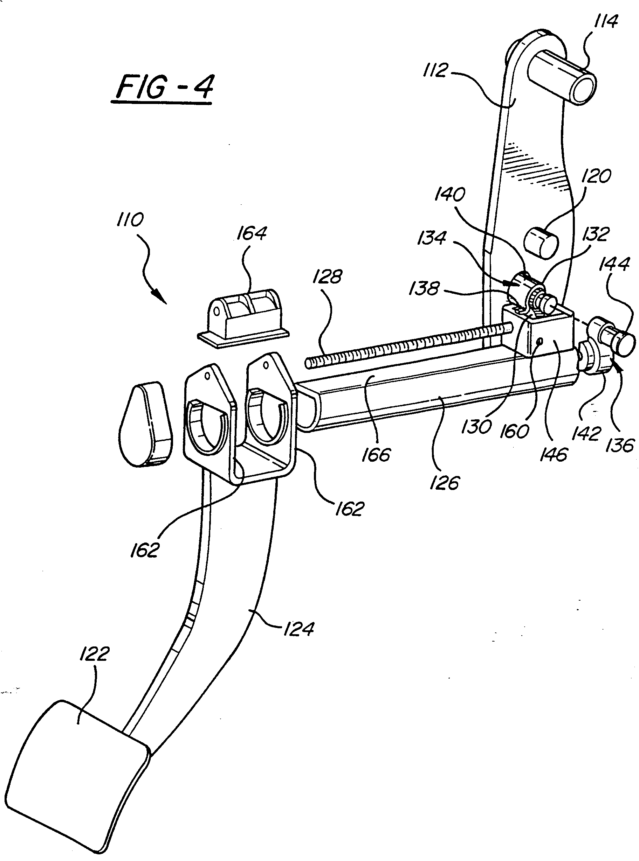

Referring to the Figures, wherein numerals differing by one hundred indicate like or corresponding parts throughout the several embodiments, an adjustable pedal assembly is generally shown at **10** and **110** in Figures 1 and 4 respectively.

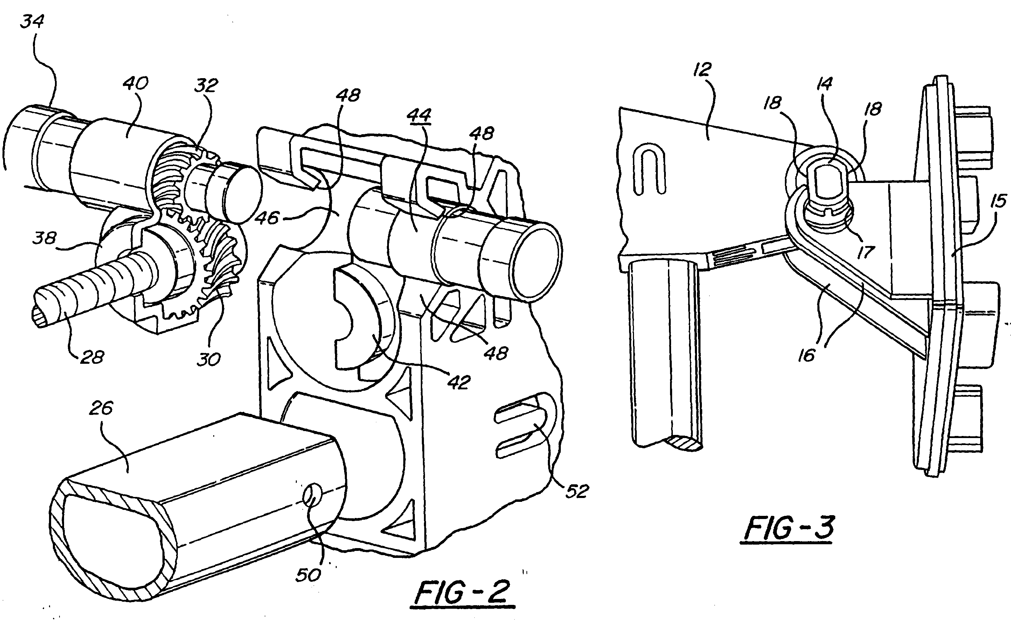

A support **12** and **112** is adapted for pivotal connection to the vehicle by a rotatable pin or shaft **14** or **114**. The embodiment of figures 1 through 3 includes a bracket **15** for attachment to the vehicle and provides an interference connection between the support **12** and the bracket **15** for assembling the support **12** to the bracket **15** in an assembly alignment condition of the support **12** relative to the bracket **15** and for retaining the support **12** connected to the bracket **15** in an interference condition. More specifically, and as illustrated in Figure 3, the bracket **15** presents arms **16** having C-shaped openings **17** for receiving the shafts **14** having flats 18 on opposite sides when the flats **18** are aligned with the slots of the C-shaped openings **17**, i.e., the aligned condition, with the slots being more narrow than the diameters of the shafts **14** to retain the shafts **14** in the C-shaped openings **17** during operation, i.e., the assembly alignment condition.

Each support **12** and **112** includes a connector **20** or **120** for connection to a control element, such as a throttle or a brake rod or cable.

A pad **22** or **122** is attached to a distal end of a pedal lever **24** or **124** for receiving a force from a vehicle operator for moving the pedal lever **24** or **124** from an operational position by rotation about the axes of the shafts **14** and **114**.

A mechanism interconnects the pedal lever **24** or **124** and the support **12** or **112** for providing an output to a control element via the connector **20** or **120** in response to movement of the pedal lever **24** or **124** from the operational position and for adjusting the pad **22** or **122** between various operational positions to accommodate various operator positions. More specifically, the mechanism includes a guide rod **26** or **126** attached to the support **12** or **112** and extending to a distal end. The pedal lever **24** or **124** is slidably supported on the guide rod **26** or **126** at a first end and depends downwardly to the distal end of the pedal lever **24** or **124**. A plurality of gears adjust the pad **22** or **122** between various operational positions gears and include a worm **32** or **132** gear **30** or **130** and a worm **32** or **132** in meshing engagement with one another. A screw **28** or **128** is connected to and rotated by the worm gear **30** or **130** and extends to a distal end. The screw **28** or **128** is in threaded engagement with the pedal lever **24** or **124** for adjusting the pedal lever **24** or **124** along the guide rod **26** or **126** between the various operational positions.

Each assembly **10** or **110** is characterized by a plurality of housing components coacting to surround and support the gears **30** or **130** and **32** or **132**. In this case, a first component, generally indicated at **34** or **134**, surrounds one half of the worm gear **30** or **130** and a first length of the worm **32** or **132** and a second component **36** or **136** surrounds the other one half of the worm gear **30** or **130** and a second length of the worm **32** or **132**. The first component **34** or **134** includes a first semi-circular cover **38** or **138** surrounding one diametrical half of the worm gear **30** or **130** and a first tube **40** or **140** integral with the first cover **38** or **138** and surrounding the first length of the worm **32** or **132**. The second component **36** or **136** includes a second semi-circular cover **42** or **142** surrounding the other one diametrical half of the worm gear **30** or **130** to abut the first cover **38** or **138** and a second tube **44** or **144** integral with the second cover **42** or **142** and surrounding the second length of the worm **32** or **132** to abut the first tube **40** or **140**. The first **40** or **140** and second **44** or **144** tubes abut one another in the same plane as the first **38** or **138** and second **42** or **142** covers abut one another. The first component **34** or **134** and the second component **36** or **136** are made of and consist of an organic polymeric material, i.e., plastic.

The support **12** or **112** includes a pocket holding the first **34** or **134** and second **36** or **136** components in position surrounding the gears **30** or **130** and **32** or **132**. The pocket **46** or **146** engages the first **38** or **138** and second **42** or **142** covers to hold the first **34** or **134** and second **36** or **136** components in abutting relationship with one another.

Turning first to the embodiment of Figures 1-3, the pocket **46** is defined by and within the support **12** and the support **12** includes flexible tabs **48** for snapping the first **34** or **134** and second **36** or **136** components into the pocket **46**. The tabs **48** flex as the tubes are pushed into the pocket **46** and snap back to engage the first **40** or **140** and second **44** or **144** tubes to retain the first **34** or **134** and second **36** or **136** components in the pocket **46**. The support **12** also consists of an organic polymeric material.

The support **12** includes a rod cavity into which the guide rod **26** is inserted and disposed. The guide rod **26** is hollow and includes a female retainer in the form of a pair of holes **50** and the support **12** has a flexible male retainer in the form of a pair of tongues **52** with projections for snapping into the holes **50** as the guide rod **26** is inserted into the rod cavity for retaining the guide rod **26** in the rod cavity and attached to the support **12**.

A cap **54** is snapped into mechanical interlocking engagement with the distal end of the guide rod **26** and engages the distal end of the screw **28**. The cap **54** also has a pair of tongues **56** with projections for snapping into holes **58** in the guide rod **26**.

The bracket **15**, the pedal lever **24** and the cap **54** consist of an organic polymeric material or plastic to facilitate the snapping together of the assembly.

Turning to the embodiment of Figure 4, the pocket **146** is defined by a box-like clamp extending about the first **38** or **138** and second **42** or **142** covers and attached to the support **112**. The clamp **146** is defined by two C-shaped halves connected by a living hinge and held together by a fastener **160** which also threadedly engages the support **112**. The support **112** is defined by a plate attached to one side of the guide rod **126** and the clamp **146** is disposed above the guide rod **126** and held in engagement with the plate by the fastener **160**.

The pedal lever **124** includes a U-shaped mount having spaced legs **162** with holes therein. The guide rod **126** extends through the holes in the legs **162**. A nut member **164** threadedly engages the screw **128** and extends between the legs **162**. The generally circular guide rod **126** has a flat **166** on the top thereof and the nut member **164** engages the flat **166**. The nut member **164** also consists of organic polymeric or plastic material.

Plastic bushings **168** are disposed in the holes of the legs **162** and are in sliding engagement with the guide rod **126** whereby the bushings **168** and the nut member **164** 5 coact to slidably support **112** the legs **162** of the pedal lever **124** on the guide rod **126**.

A metal cap **154** is attached to the distal end of the guide rod **126** by a set screw and engages the distal end of the screw **128**.

The invention has been described in an illustrative manner, and it is to be understood that the terminology which has been used is intended to be in the nature of 10 words of description rather than of limitation. Obviously, many modifications and variations of the present invention are

possible in light of the above teachings and the invention may be practiced otherwise than as specifically described within the scope of the appended claims, wherein that which is prior art is antecedent to the novelty set forth in the "characterized by" clause. The novelty is meant to be particularly and distinctly recited in the "characterized by" clause whereas the antecedent recitations merely set forth an old and well known combination in which the invention resides and these antecedent recitations should be interpreted to cover any combination in which the inventive novelty has utility. In addition, the reference numerals are merely for convenience and are not to be in any way to be read as limiting.

## Claims

1. An adjustable pedal assembly comprising;
a support (**12** or **112**) for attachment to a vehicle,
a pedal lever (**24** or **124**) having a distal end,
a pad (**22** or **122**) attached to said distal end of said pedal lever (**24** or **124**) for receiving a force from a vehicle operator for moving said pedal lever (**24** or **124**) from an operational position,
a mechanism interconnecting said pedal lever (**24** or **124**) and said support (**12** or **112**) for providing an output to a control element in response to movement of said pedal lever (**24** or **124**) from said operational position and for adjusting said pad (**22** or **122**) between various operational positions to accommodate various operator positions,
a plurality of gears for adjusting said pad (**22** or **122**) between various operational positions,
said assembly characterized by a plurality (**34** or **134**) and (**36** or **136**) of housing components coacting to surround and support said gears.

2. An assembly as set forth in claim 1 wherein said gears include a worm gear (**30** or **130**) and a worm (**32** or **132**) in meshing engagement with one another, said plurality of housing components including a first component (**34** or **134**) surrounding one half of said worm gear (**30** or **130**) and a first length of said worm (**32** or **132**) and a second component (**36** or **136**) surrounding the other one half of said worm gear (**30** or **130**) and a second length of said worm (**32** or **132**).

3. An assembly as set forth in claim 2 wherein said support (**12** or **112**) includes a pocket (**46** or **146**) holding said first (**34** or **134**) and second (**36** or **136**) components in position surrounding said gears.

4. An assembly as set forth in claim 3 wherein said first component (**34** or **134**) includes a first semi-circular cover (**38** or **138**) surrounding one diametrical half of said worm gear (**30** or **130**) and an first tube first (**40** or **140**) integral with said first cover (**38** or **138**) and surrounding said first length of said worm (**32** or **132**), and said second component (**36** or **136**) includes a second semi-circular cover (**42** or **142**) surrounding the other one diametrical half of said worm gear (**30** or **130**) to abut said first cover (**38** or **138**) and a second tube (**44** or **144**) integral with said second cover (**42** or **142**) and surrounding said second length of said worm (**32** or **132**) to abut said first tube (**40** or **140**).

5. An assembly as set forth in claim 4 wherein said first (**40** or **140**) and second (**44** or **144**) tubes abut one another in the same plane as said first (**38** or **138**) and second (**42** or **142**) covers abut one another.

6. An assembly as set forth in claim 5 wherein said pocket (**46** or **146**) engages said first (**38** or **138**) and second (**42** or **142**) covers to hold said first (**34** or **134**) and second (**36** or **136**) components in abutting relationship with one another.

7. An assembly as set forth in claim 6 wherein said support (**12** or **112**) is adapted for pivotal connection to the vehicle and includes a connector for connection to a control element.

8. An assembly as set forth in claim 7 wherein said mechanism includes a guide rod (**26** or **126**) attached to said support (**12** or **112**) and extending to a distal end, said pedal lever (**24** or **124**) slidably supported on said guide rod (**26** or **126**) at a first end and depending to said distal end, a screw (**28** or **128**) rotated by said worm gear (**30** or **130**) and extending to a distal end, said screw (**28** or **128**) being in threaded engagement with said pedal lever (**24** or **124**) for adjusting said pedal lever (**24** or **124**) along said guide rod (**26** or **126**) between said various operational positions.

9. An assembly as set forth in claim 8 wherein said pocket (**46**) is defined by said support (**12**) and said support (**12**) includes flexible tabs (**48**) for snapping said first (**34** or **134**) and second (**36** or **136**) components into said pocket (**46**).

10. An assembly as set forth in claim 9 wherein said tabs (**48**) engage said first (**40** or **140**) and second (**44** or **144**) tubes.

11. An assembly as set forth in claim 10 wherein said support (**12**) consists of an organic polymeric material and includes a rod cavity, said guide rod (**26**) disposed in said rod cavity, said guide rod (**26**) including a female retainer and said support (**12**) having a flexible male retainer for snapping into said female retainer as said guide rod (**26**) is inserted into said rod cavity for retaining said guide rod (**26**) in said rod cavity and attached to said support (**12**).

12. An assembly as set forth in claim 11 including a bracket (**15**) for attachment to the vehicle, an interference connection between said support (**12**) and said bracket (**15**) for assembling said support (**12**) to said bracket (**15**) in an assembly alignment condition of said support (**12**) relative to said bracket (**15**) and for retaining said support (**12**) connected to said bracket (**15**) in an interference condition.

13. An assembly as set forth in claim 12 including a cap snapped into mechanical interlocking engagement with said distal end of said guide rod (**26**) and engaging said distal end of said screw (**28**).

14. An assembly as set forth in claim 13 wherein said bracket (**15**), said pedal lever (**24**) and said cap also consist of an organic polymeric material.

15. An assembly as set forth in claim 8 wherein said pocket (**146**) is defined by a clamp extending about said first (**38** or **138**) and second (**42** or **142**) covers and attached to said support (**112**).

16. An assembly as set forth in claim 15 wherein said support (**112**) is defined by a plate attached to one side of said guide rod (**126**) and said clamp is disposed above said guide rod (**126**) and in engagement with said plate.

17. An assembly as set forth in claim 16 wherein said pedal lever (**124**) includes a U-shaped mount having spaced legs with holes therein, said guide rod (**126**) extending through said holes in said legs, a nut member (**164**) threadedly engaging said screw (**128**) and extending between said legs.

18. An assembly as set forth in claim 17 wherein said guide rod (**126**) has a flat on the top thereof and said nut member (**164**) engages said flat.

19. An assembly as set forth in claim 18 wherein said nut member (**164**) consists of organic polymeric material.

20. An assembly as set forth in claim 19 including bushings in said holes and in sliding engagement with said guide rod (**126**) whereby said bushings and said nut member (**164**) coact to slidably support (**112**) said legs of said pedal lever (**124**) on said guide rod (**126**).

21. An assembly as set forth in claim 20 including a cap engaging said distal end of said guide rod (**126**) and said distal end of said screw (**128**)
